Europäisches Patentamt

European Patent Office

Office européen des brevets

(11) Veröffentlichungsnummer: **0 240 807**
B1

# (12) EUROPÄISCHE PATENTSCHRIFT

(45) Veröffentlichungstag der Patentschrift:
24.10.90

(21) Anmeldenummer: 87104113.3

(22) Anmeldetag: 20.03.87

(51) Int. Cl.⁵: **G01K 7/00**, G01K 3/00

(54) Schaltungsanordnung zur Übertemperaturerfassung von Leistungs-Halbleiterbauelementen.

(30) Priorität: 21.03.86 DE 3609713

(43) Veröffentlichungstag der Anmeldung:
14.10.87 Patentblatt 87/42

(45) Bekanntmachung des Hinweises auf die Patenterteilung:
24.10.90 Patentblatt 90/43

(84) Benannte Vertragsstaaten:
DE FR GB IT SE

(56) Entgegenhaltungen:
EP-A- 0 117 095
EP-A- 0 160 836
EP-A- 0 217 620
DE-A- 2 933 874
DE-A- 3 415 764
DE-B- 2 519 335
US-A- 3 809 929

NEW ELECTRONICS, Band 15, Nr. 8, 20. April 1982,
Seite 24, London, GB; D.R. FOWNES: "Temperature
sensing by transistor charateristics"
PATENT ABSTRACTS OF JAPAN, Band 7,
Nr. 64 (P-183), 17. März 1979, Seite 6 P 183; &
JP-A-57 207 834 (SHINNIHON MUSEN K.K.) 20-12-1982

(73) Patentinhaber: Siemens Aktiengesellschaft,
Wittelsbacherplatz 2, D-8000 München 2(DE)

(72) Erfinder: Einzinger, Josef, Dipl.-Ing., Am Weiher 21,
D-8044 Unterschleissheim(DE)
Erfinder: Fellinger, Christine, Von Stauffenberg
Strasse 3,, D-8025 Unterhaching(DE)
Erfinder: Leipold, Ludwig, Dipl.-Ing., Strassberger
Strasse 125, D-8000 München 40(DE)
Erfinder: Tihanyi, Jenö, Dr., Windeck 1 d,,
D-8000 München 70(DE)
Erfinder: Weber, Roland, Dipl.-Ing., Ursulastrasse 5,,
D-8000 München 40(DE)

## Beschreibung

Die Erfindung bezieht sich auf eine Schaltungsanordnung zur Erzeugung eines Signals bei Überschreiten einer kritischen Temperatur eines Gegenstandes, insbesondere eines Leistungs-Halbleiterbauelements unter Verwendung von Halbleiterbauelementen mit temperaturabhängiger Strom/Spannungs-Charakteristik, einer Stromquelle und einem Schwellwertglied, dessen Ausgang das genannte Signal liefert.

Solche Schaltungsanordnungen sind vielfach beschrieben worden. So findet sich in der Zeitschrift «New Electronics», April 20, 1982, S. 24 eine Schaltungsanordnung, die den Vorwärts-Spannungsabfall eines Bipolartransistors erfasst und mit einem festen Wert vergleicht. In der DE 3 415 764 A1 ist eine Schaltungsanordnung beschrieben, bei der der Spannungsabfall einer in Durchlaßrichtung betriebenen Diode erfaßt und mit einem Sollwert verglichen wird. In der EP 217 620 (Priorität vom 25.9.85; veröffentlicht am 8.4.87) ist eine Schaltungsanordnung beschrieben, bei der der Vorwärts-Spannungsabfall eines Triac erfaß und mit einem Sollwert verglichen wird.

Diese Schaltungsanordnungen haben den Nachteil, daß der Vorwärts-Spannungsabfall von Halbleiterbauelementen keine sehr starke Temperaturabhängigkeit aufweist.

Der Erfindung liegt die Aufgabe zugrunde, eine Schaltungsanordnung der erwähnten Gattung so auszubilden, daß sie einen stärker von der Temperatur abhängigen Strom liefert.

Diese Aufgabe wird — ausgehend von der eingangs dargelegten Schaltungsanordnung — gelöst durch die Merkmale:

a) ein Bipolartransistor, der in thermischem Kontakt mit dem Gegenstand steht und einen temperaturabhängigen Sperrstrom besitzt,

b) die Stromquelle ist mit dem Bipolartransistor in Reihe geschaltet, wobei der eine Anschluß der Stromquelle mit dem Emitteranschluß des Bipolartransistor verbunden ist;

c) der eingeprägte Strom der Stromquelle ist größer als der genannte Sperrstrom bei einer bestimmten, unter der kritischen Temperatur liegenden Temperatur;

d) der Eingang des Schwellwertgliedes ist mit dem Emitteranschluß des Bipolartransistors verbunden.

Die Erfindung wird anhand eines Ausführungsbeispiels in Verbindung mit den Fig. 1 bis 3 näher erläutert. Es zeigen:

Fig. 1 die Schaltungsanordnung gemäß der Erfindung,
Fig. 2 die Strom/Spannungs-Charakteristik eines Depletion-MOSFET,
Fig. 3 eine Ausführungsform der räumlichen Anordnung des Bipolartransistors und des Depletion-MOSFET auf dem Leistungs-Halbleiterbauelement.

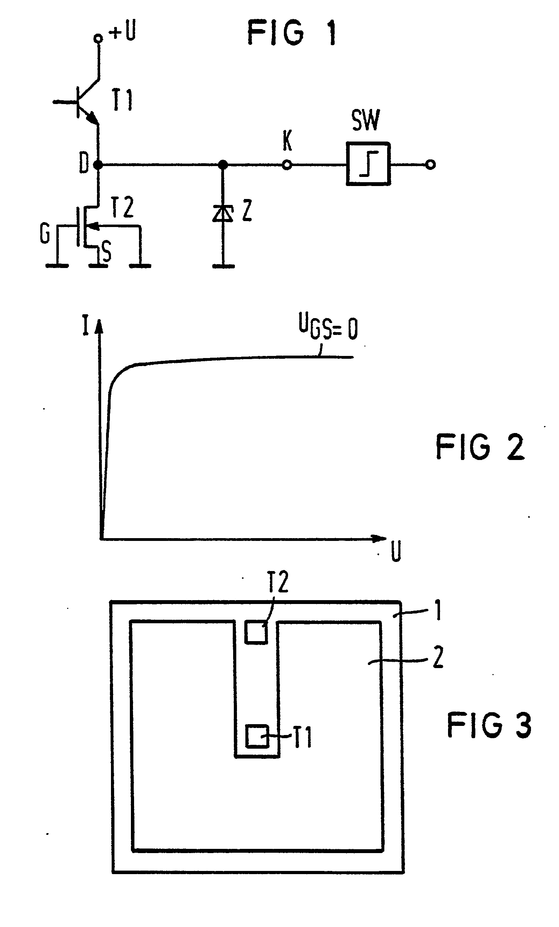

Die Schaltungsanordnung nach Fig. 1 enthält einen Bipolartransistor T 1, dem die Source-Drainstrecke eines Depletion-MOSFET T 2 in Reihe geschaltet ist. Der Bipolartransistor hat einen offenen Basisanschluß und steht in thermischem Kontakt mit dem zu überwachenden Leistungs-Halbleiterbauelement. Der Transistor T 2 hat einen Gateanschluß G, der mit dem Sourceanschluß S elektrisch verbunden ist. Der Drainanschluß D ist mit dem Emitteranschluß des Transistors T 1 verbunden, sein Kollektoranschluß liegt an einer Spannung +U. Mit dem Drainanschluß des Transistors T 2 bzw. dem Emitteranschluß des Transistors T 1 ist eine Eingangsklemme K eines Schwellwertglieds SW verbunden.

Der Transistor T 1 ist im Ausführungsbeispiel ein npn-Transistor, der Transistor T 2 ein n-Kanal-Depletion-MOSFET. Soll die Schaltungsanordnung für negative Spannung -U ausgelegt werden, so wird als Transistor T 1 ein pnp-Transistor und als Transistor T 2 ein p-Kanal-Depletion-MOSFET verwendet.

Bei Anlegen einer Spannung fließt bereits bei Zimmertemperatur ein Sperrstrom durch den Transistor T 1. Dieser Sperrstrom durchfließt auch den Depletion-MOSFET T 2. T 2 erhält die Gate-Source-Spannung $U_{GS} = 0$ V und arbeitet im flachen Teil der Kennlinie nach Fig. 2. Er wirkt als Stromquelle und ist so dimensioniert, daß sein eingeprägter Strom größer ist als derjenige Sperrstrom, der bei Zimmertemperatur durch T 1 fließt. Für diesen kleineren Strom bildet T 2 einen kleinen Widerstand, so daß am Drainanschluß D von T 2 und damit an der Klemme K etwa Massepotential liegt. Diese Spannung wird vom Schwellwertglied SW als Signal L angezeigt.

Steigt die Temperatur des Leistungs-Halbleiterbauelements und damit die von T 1 an, so steigt der Sperrstrom durch T 1 nach einer e-Funktion multipliziert mit seinem Stromverstärkungsfaktor β steil an. Dieser Anstieg ist insbesondere dann sehr steil, wenn wie im Ausführungsbeispiel der Basisanschluß von T 1 offen ist. Prinzipiell kann der Basisanschluß aber auch beschaltet sein. Erreicht der Strom die Höhe desjenigen Stroms, der T 2 eingeprägt ist, nimmt der Innenwiderstand von T 2 stark zu und T 2 nimmt Spannung auf. Damit steigt das Potential am Drainanschluß D sprunghaft auf einen von Massepotential deutlich verschiedenen Wert zwischen Massepotential und +U.

Zum Schutz des Eingangs des Schwellwertglieds und einer eventuell nachgeschalteten Logikschaltung liegt zwischen Klemme K und Masse eine Zenerdiode Z, die die Eingangsspannung des Schwellwertglieds beispielsweise auf 6 V begrenzt. Die Schwelle des Schwellwertglieds SW liegt z. B. bei der Hälfte der Zenerspannung, d. h., z. B. bei 3 V. Das Überschreiten dieser Spannung wird als Signal H angezeigt.

Zur Festlegung des Umschaltpunktes wird der Depletion-MOSFET T 2 derart dimensioniert, daß er bei derjenigen Temperatur, bei der umgeschaltet, d. h. Signal H angezeigt werden soll, einen eingeprägten Strom führt, der so groß ist wie derjenige Strom, den T 1 bei dieser Temperatur führt.

Der Umschaltpunkt läßt sich ziemlich genau definieren, da der Sperrstrom von T 1, wie bereits erwähnt, nach einer e-Funktion multipliziert mit β als Funktion der Temperatur ansteigt, während der eingeprägte Strom aus T 2 sehr viel weniger stark temperaturabhängig ist. Durch die Wahl der Kanallänge von T 2 läßt sich darüber hinaus noch erreichen, daß sich die Temperaturabhängigkeit der Einsatzspannung mit der der Trägerbeweglichkeit kompensiert. Damit wird der Strom durch T 2 temperaturunabhängig.

Es ist zweckmäßig, den Bipolortransistor T 1 an diejenige Stelle des Leistungs-Halbleiterbauelements zu setzen, an der zuerst eine kritische Temperatur auftritt. Diese Stelle ist die Mitte des Leistungs-Halbleiterbauelements, wie in Fig. 3 dargestellt. Dabei ist das Chip des Leistungs-Halbleiterbauelements mit 1 bezeichnet und die aktive Fläche mit 2. Der Transistor T 1 sitzt hier in einer Aussparung der aktiven Fläche 2. Der Depletion-MOSFET T 2 kann auch auf das Chip integriert werden und sitzt zweckmäßigerweise an einer von der Mitte der aktiven Fläche 2 entfernten Stelle, beispielsweise am Rand des Chips.

Die Stromquelle kann auch durch einen Enhancement-FET gebildet werden, dem eine definierte Gate-Source-Spannung zugeführt wird, oder auch beliebig anders aufgebaut sein.

Die Schaltungsanordnung kann auch dazu benutzt werden, andere Gegenstände als Leistungs-Halbleiterbauelemente auf erhöhte Temperatur zu überwachen.

**Patentansprüche**

1. Schaltungsanordnung zur Erzeugung eines Signals bei Überschreiten einer kritischen Temperatur eines Gegenstandes, insbesondere eines Leistungs-Halbleiterbauelementes (T1) mit temperaturabhängiger Strom/Spannungs-Charakteristik, einer Stromquelle (T2) und einem Schwellwertglied (SW), dessen Ausgang das genannte Signal liefert, gekennzeichnet durch die Merkmale:
   a) ein Bipolartransistor (T1), der in thermischem Kontakt mit dem Gegenstand steht und einen temperaturabhängigen Sperrstrom besitzt;
   b) die Stromquelle (T2) ist mit dem Bipolartransistor (T1) in Reihe geschaltet, wobei der eine Anschluß der Stromquelle mit dem Emitteranschluß des Bipolartransistors verbunden ist;
   c) der eingeprägte Strom der Stromquelle (T2) ist größer als der genannte Sperrstrom bei einer bestimmten, unter der kritischen Temperatur liegenden Temperatur;
   d) der Eingang (K) des Schwellwertglieds (SW) ist mit dem Emitteranschluß des Bipolartransistors (T1) verbunden.

2. Schaltungsanordnung nach Anspruch 1, dadurch gekennzeichnet, daß die Stromquelle ein Depletion-FET (T 2) ist, dessen Source- und Gateanschluß miteinander verbunden und dessen Drainanschluß mit dem Emitteranschluß des Bipolartransistors (T 1) verbunden ist.

3. Schaltungsanordnung nach Anspruch 1 oder 2, dadurch gekennzeichnet, daß zwischen der Eingangsklemme (K) des Schwellwertglieds (SW) und Masse mindestens eine Zenerdiode (Z) liegt.

4. Schaltungsanordnung nach einem der Ansprüche 1 bis 3, dadurch gekennzeichnet, daß der Bipolartransistor (T 1) wenigstens angenähert in der Mitte der Fläche des Leistungs-Halbleiterbauelements (1) angeordnet ist.

5. Schaltungsanordnung nach einem der Ansprüche 1 bis 4, dadurch gekennzeichnet, daß der FET (T 2) in das Leistungs-Halbleiterbauelement integriert ist und am Rand des Chips (1) angeordnet ist.

6. Schaltungsanordnung nach Anspruch 1, dadurch gekennzeichnet, daß der Basisanschluß des Bipolartransistors (T 1) offen ist.

**Revendications**

1. Montage pour produire un signal lors du dépassement d'une température critique d'un objet, notamment un composant à semiconducteurs de puissance (1, 2), moyennant l'utilisation de composant à semiconducteurs (T1) possédant une caractéristique courant/tension qui dépend de la température, d'une source de courant (T2) et d'un circuit à valeur de seuil (SW) dont la sortie délivre ledit signal, caractérisé par les particularités suivantes:
   a) un transistor bipolaire (T1), qui est placé en contact thermique avec l'objet et possède un courant de blocage qui dépend de la température;
   b) la source de courant (T2) est branchée en série avec le transistor bipolaire (T1), une borne de la source de courant étant reliée à la borne d'émetteur du transistor bipolaire;
   c) le courant injecté de la source de courant (T2) est supérieur audit courant de blocage pour une température déterminée inférieure à la température critique,
   d) l'entrée (K) du circuit à valeur de seuil (SW) est réliée à la borne d'émetteur du transistor bipolaire (T1).

2. Montage suivant la revendication 1, caractérisé par le fait que la source de courant est un transistor FET à appauvrissement (T2), dont les bornes de source et de grille sont reliées entre elles et dont la borne de drain est reliée à la borne d'émetteur du transistor bipolaire (T1).

3. Montage suivant la revendication 1 ou 2, caractérisé par le fait qu'au moins une diode Zener (Z) est branchée entre la borne d'entrée (K) du circuit à valeur de seuil (SW) et la masse.

4. Montage suivant l'une des revendications 1 à 3, caractérisé par le fait que le transistor bipolaire (T1) est disposé au moins approximativement au centre de la surface du composant à semiconducteurs de puissance (1).

5. Montage suivant l'une des revendications 1 à 4, caractérisé par le fait que le transistor FET (T2) est intégré dans le composant à semiconducteurs de puissance et est disposé sur le bord de la microplaquette (1).

6. Montage suivant la revendication 1, caractérisé par le fait que la borne de base du transistor bipolaire (T1) est ouverte.

## Claims

1. Circuit arrangement for generating a signal when an object, preferably a semi-conductor power device (1, 2), exceeds a critical temperature, making use of semi-conductor devices (T1) with a temperature-dependent current-voltage characteristic, of a current source (T2) and of a treshold element (SW) whose output delivers the said signal, characterized by the features:

a) a bipolar transistor (T1), which is in thermal contact with the object and has a temperature-dependent blocking-state current;

b) the current source (T2) is connected in series with the bipolar transistor (T1), one terminal of the current source being connected to the emitter terminal of the bipolar transistor;

c) the impressed current of the current source (T2) is larger than the said blocking-state current at a specific temperature less than the critical temperature;

d) the input (K) of the treshold element (SW) is connected to the emitter terminal of the bipolar transistor (T1).

2. Circuit arrangement according to claim 1, characterized in that the current source is a depletion FET (T2) whose source terminal and gate terminal are connected to one another, and whose drain terminal is connected to the emitter terminal of the bipolar transistor (T1).

3. Circuit arrangement according to claim 1 or 2, characterized in that at least one Zener diode (Z) is located between the input terminal (K) of the threshold element (SW) and earth.

4. Circuit arrangement according to claim 1 to 3, characterized in that the bipolar transistor (T1) is arranged at least approximately in the centre of the face of the semi-conductor power device (1).

5. Circuit arrangement according to one of claims 1 to 4, characterized in that the FET (T2) is integrated into the semi-conductor power device and is arranged at the edge of the chip (1).

6. Circuit arrangement according to claim 1, characterized in that the base terminal of the bipolar transistor (T1) is open.

## FIG 1

## FIG 2

## FIG 3